# EUROPÄISCHE PATENTSCHRIFT

(11) **EP 2 229 308 B1**
(45) Veröffentlichungstag und Bekanntmachung des Hinweises auf die Patenterteilung: **25.04.2012**
(21) Anmeldenummer: 08870028.1
(22) Anmeldetag: 10.11.2008
(51) Int. Cl.: B62D 6/00, B62D 15/02, B60W 40/08, B60W 50/08

(54) **VERFAHREN FÜR DIE STEUERUNG EINES FAHRERASSISTENZSYSTEMS UND FAHRERASSISTENZSYSTEM**
METHOD FOR CONTROLLING A DRIVER ASSISTANCE SYSTEM, AND DRIVER ASSISTANCE SYSTEM
PROCÉDÉ DE COMMANDE D'UN SYSTÈME D'ASSISTANCE À LA CONDUITE, ET SYSTÈME D'ASSISTANCE À LA CONDUITE

(30) Priorität: 09.01.2008 DE 102008003666
(43) Veröffentlichungstag der Anmeldung: 22.09.2010
(73) Patentinhaber: Robert Bosch GmbH, 70442 Stuttgart (DE)
(72) Erfinder: SEGER, Ulrich, 71229 Leonberg-Warmbronn (DE)
(86) Internationale Anmeldenummer: PCT/EP2008/065232
(87) Internationale Veröffentlichungsnummer: WO 2009/086966

(56) Entgegenhaltungen:
- EP-A- 1 977 946
- EP-A- 1 990 250
- WO-A-2006/037445
- WO-A-2006/125709
- WO-A-2008/020071
- DE-A1-102004 048 530
- DE-A1-102004 051 963
- DE-A1-102005 048 014
- DE-A1-102007 015 879

## Beschreibung

### Stand der Technik

Die Erfindung betrifft ein Verfahren für die Steuerung eines Fahrerassistenzsystems nach dem Oberbegriff des Anspruchs 1 und ein Fahrerassistenzsystem nach dem Oberbegriff des Anspruchs 13. Es sind bereits Fahrerassistenzsysteme bekannt, die den Fahrer eines Fahrzeugs vor dem Verlassen eines Fahrstreifens warnen oder ihn bei dem Einhalten eines gewählten Fahrstreifens unterstützen. Das Fahrerassistenzsystem umfasst dazu Assistenzfunktionen wie LDW (Lane Departure Warning) und/oder LKS (Lane Keeping Support). Die Assistenzfunktion LDW warnt den Fahrer vor einem Verlassen der Fahrstreifen durch Erzeugung von optischen und/oder akustischen und/oder haptischen Signalen. Die Assistenzfunktion LKS greift aktiv in Bordsysteme des Fahrzeugs, insbesondere in das Lenksystem ein, um ein von dem Fahrstreifen abweichendes Fahrzeug in dem Fahrstreifen zu halten. Das Fahrerassistenzsystem umfasst dazu ein insbesondere mindestens einen Videosensor umfassendes Sensorsystem für die Erfassung von Fahrstreifenmarkierungen oder dergleichen.

Bisher bekannte Fahrerassistenzsysteme mit Querführungsfunktion, wie zum Beispiel LDW, LKS oder eine automatische Querführung in einem Stauassistenzsystem, versuchen das Fahrzeug möglichst in der Mitte der Fahrstreifen zu führen. Die meisten Fahrer empfinden es aber eher als unangenehm, streng genau die Mitte des eigenen Fahrstreifens einzuhalten, wenn ein Fahrzeug auf einem benachbarten Fahrstreifen sehr nahe an der Begrenzung des eigenen Fahrstreifens fährt oder die Fahrstreifenbegrenzung sogar überfährt und somit auf den eigenen Fahrstreifen gelangt. Als besonders unangenehm oder sogar bedrohlich wird diese Situation dann empfunden, wenn es sich bei dem Fahrzeug auf der Nachbarspur um ein großes Fahrzeug, wie zum Beispiel einen NKw oder einen Bus handelt.

Aus DE 102007015879.5 ist es für die Steuerung eines Fahrerassistenzsystems bereits bekannt, das Fahrzeugumfeld auf Hindernisse zu überwachen und bei Erfassen eines Hindernisses die Solltrajektorie des Fahrzeugs derart zu verändern, dass ein gefahrloses Passieren des erfassten Hindernisses ermöglicht wird. Vorzugsweise wird dabei ein dem jeweiligen Hindernis zugeordneter Sicherheitsbereich definiert, dessen Größe vorteilhaft auch noch von der Größe des Hindernisses abhängig sein kann.

Aus DE 102005048014.4 ist weiterhin ein Fahrerassistenzsystem mit einer Spurhaltefunktion bekannt, umfassend eine Einrichtung für die Erkennung des Fahrstreifens auf der Fahrbahn, eine Steuereinrichtung für den Eingriff in das Lenksystem des Fahrzeugs im Sinne einer Spurhaltung, wobei Mittel vorgesehen sind, um eine Kurvenfahrt des Fahrzeugs zu erfassen. Die Steuerungseinrichtung übt ihre Steuerungsfunktion in Abhängigkeit von der Position des Fahrzeugs auf dem Fahrstreifen und in Abhängigkeit von einer Kurvenfahrt aus.

Aus DE 101 14 470 A1 ist ein Spurwechselassistent bekannt mit einem Videosystem als Sensoreinrichtung. Mit der Sensoreinrichtung können Fahrstreifenmarkierungen auf der Fahrbahn und damit auch die Querposition des eigenen Fahrzeugs in Bezug auf den aktuell befahrenen Fahrstreifen erkannt werden. Wenn die Querposition des Fahrzeugs um mehr als eine bestimmte Toleranzgrenze zu der einen oder anderen Seite von der Spurmitte abweicht, erfolgt automatisch ein Regeleingriff in die Lenkung, um das Fahrzeug wieder annähernd auf die Spurmitte zurückzuführen. Hierdurch wird der Fahrkomfort für den Fahrer gesteigert und auch die Fahrsicherheit erhöht, da der Fahrer sich ganz auf das Verkehrsgeschehen konzentrieren kann. Wenn der Fahrer jedoch absichtlich einen Spurwechsel vornehmen will, um etwa einen Überholvorgang einzuleiten, muss er bei aktiver Spurhaltefunktion eine größere Kraft auf das Lenkrad ausüben, um die durch den Regeleingriff des Spurhalteassistenten verursachten Kräfte zu überwinden. Aus dem Grund ist bei dem bekannten System vorgesehen, dass die Spurhaltefunktion zumindest zeitweise deaktiviert wird, wenn eine Spurwechselabsicht des Fahrers erkannt wird, beispielsweise anhand der Betätigung des Fahrtrichtungsanzeigers.

Aus DE 102 005 024 382.7 ist weiterhin ein Spurhalteassistent für Kraftfahrzeuge bekannt, mit einer Sensoreinrichtung zur Erkennung des Fahrstreifens auf der Fahrbahn, mit einer Steuereinrichtung, die über ein Stellglied eine Kraft auf die Lenkung des Fahrzeugs ausübt, um das Fahrzeug in der Spur zu halten, und mit einer Einrichtung zur Erkennung der Spurwechselabsicht des Fahrers. Dabei ist die Steuereinrichtung derart ausgebildet, dass bei erkannter Spurwechselabsicht die auf die Lenkung ausgeübte Kraft asymmetrisch im Sinne eines leichteren Spurwechsels modifizierbar ist. Weiterhin ist bei erkannter Spurwechselabsicht von der eigenen Spur auf eine Zielspur der Betrag der auf die Lenkung des Fahrzeugs ausgeübten Kraft so von der Abweichung des Fahrzeugs von der Solltrajektorie abhängig, dass die Kraft für Querpositionen zwischen der Solltrajektorie auf der eigenen Spur und der Solltrajektorie auf der Zielspur verringert oder gleich Null ist, jenseits der Solltrajektorie der Zielspur jedoch wieder zunimmt.

Aus DE 10 2004 015 749 A1 ist eine Vorrichtung zur Bestimmung einer Durchfahrtsmöglichkeit für ein Fahrzeug an Hindernissen bekannt, die dazu dient, abzuschätzen, ob ein Fahrzeug bezüglich seiner Fahrzeughöhe und/oder seiner Fahrzeugbreite zwischen Hindernissen hindurchfahren kann. Die Vorrichtung umfasst eine Sensoreinheit zur Messung der Durchfahrtsbreite zwischen Hindernissen und/oder einer Durchfahrtshöhe unter Hindernissen und eine Auswerteeinheit, wobei von der Auswerteeinheit die ermittelte Durchfahrtsbreite und/oder die ermittelte Durchfahrtshöhe mit einer Fahrzeugbreite und/oder Fahrzeughöhe derart verglichen wird, dass eine Warnung für den Fall ausgegeben wird, dass die ermittelte Durchfahrtshöhe und/oder die ermittelte Durchfahrtsbreite eine Durchfahrtsmöglichkeit des Fahrzeugs an den Hindernissen nicht zulässt.

Die DE 10 2004 048 530 A1 zeigt ein gattungsgemäβes Fahrerassistenzsystem, welches den Fahrer eines LKWs unterstützt, um einen hindemisreichen Streckenabschnitt kollisionsfrei zu durchfahren. Hierbei wird mittels einer grafischen Ausgabe dem Fahrer eine Mehrzahl von möglichen Fahrtrajektorien vorgeschlagen, von denen jener eine auswählen kann. Sodann bietet das Fahrerassistenzsystem eine Unterstützung bei der Durchfahrt für diese gewählte Trajektorie.

Die DE 10 2004 051 963 zeigt ein System zur Unterstützung eines Fahrers, wobei der Fahrer darauf hingewiesen wird, welche fahrtechnischen Manöver (Lenken, Beschleunigung) er idealerweise durchführen sollte. Abhängig von den Ausführungen des Fahrers, wird die Fahrsituation laufend neu bewertet und auf die Absichten des Fahrers geschlossen, um darauf basierend eine optimale Unterstützung bieten zu können.

In der WO 2006/037445 A ist ebenfalls ein System gezeigt, das den Fahrer warnt bzw. in die Fahrdynamik eingreift, falls ein Verlassen der Fahrspur droht. Abhängig von verschiedenen Umgebungsparametern wie der Spurbreite, dem Vorhandensein anderer Verkehrsteilnehmer oder anderer fahrzeuginterner Parameter wie Aufmerksamkeit des Fahrers, aktuelle Fahrzeugposition, wird aus verschiedenen lateralen Sicherheitsabständen, insbesondere bei der Kurvendurchfahrt, ein geeignet erscheinender gewählt.

### Offenbarung der Erfindung

### Vorteile der Erfindung

Bei der nachfolgend beschriebenen Verfahrensweise wird das individuelle Fahrverhalten des Fahrers stärker berücksichtigt. Als Führungsgröße der LKS-Funktion des Fahrerassistenzsystems wird nicht mehr die Mitte eines detektierten Fahrstreifens herangezogen, sondern eine Trajektorie, die an die Präferenz des Fahrers angepasst ist.

Durch die Anpassung des Steuerungsverhaltens des Fahrerassistenzsystems an den Fahrstil des Fahrers kommen dem Fahrer Eingriffe des Fahrerassistenzsystems bei aktiver LKS Assistenzfunktion vertrauter vor. Er ist daher auch bereit, solche Eingriffe bereitwilliger zu akzeptieren, da sie seinem Fahrstil im Wesentlichen entsprechen.

Dem Wunsch des Fahrers entsprechend, kann ein Wahlmodus gewählt werden, nach dem das Fahrerassistenzsystem eine optimierte Trajektorie für die Führung des Fahrzeugs festlegt und verfolgt. Der Fahrerwunsch kann vorteilhaft durch eine von dem Fahrer betätigbare Schalteinrichtung oder dergleichen festgelegt werden. Ähnlich wie bei einer Getriebesteuerung kann dabei die dem gewünschten Wahlmodus entsprechende Charakteristik des Fahrzeugs schon bei der Applikation festgelegt werden. Alternativ kann der Fahrerwunsch automatisch erfasst werden, indem ein adaptives Fahrerassistenzsystem die Fahrweise des Fahrers erfasst und diese auswertet. Vorteilhaft sind mindestens zwei Wahlmodi vorgesehen, die einer dynamischen bzw. einer defensiven Fahrweise des Fahrers entsprechen. Eine optimierte Trajektorie für das Fahrzeug wird dann in Abhängigkeit von dem jeweils ausgewählten Wahlmodus festgelegt. Bei Auswahl eines eine dynamische Fahrweise kennzeichnenden Wahlmodus wird die Trajektorie des Fahrzeugs derart festgelegt, dass das Fahrzeug bei Einfahrt in eine Kurve des Fahrstreifens eher zu der Außenseite des Fahrstreifens orientiert geführt wird, dass das Fahrzeug in dem Scheitelpunkt der Kurve zu der Innenseite des Fahrstreifens geführt wird, und dass an dem Ausgang der Kurve das Fahrzeug im Wesentlichen wieder auf der Mitte des Fahrstreifens geführt wird. Bei Auswahl eines eine defensive Fahrweise kennzeichnenden Wahlmodus wird die Trajektorie des Fahrzeugs vorteilhaft derart festgelegt, dass das Fahrzeug bei Einfahrt in eine Kurve des Fahrstreifens eher zu der Mitte des Fahrstreifens orientiert geführt wird, dass das Fahrzeug in dem Scheitelpunkt der Kurve eher zu der Innenseite des Fahrstreifens geführt wird, und dass an dem Ausgang der Kurve das Fahrzeug im Wesentlichen wieder auf die Mitte des Fahrstreifens geführt wird. Bei Detektion eines Hindernisses auf dem Fahrstreifen wird die dem Wahlmodus entsprechende Trajektorie vorteilhaft derart verändert, dass das Fahrzeug risikofrei an dem Hindernis vorbeigeführt wird. Nach dem Passieren des Hindernisses wird das Fahrzeug vorteilhaft wieder auf die dem Wahlmodus entsprechende Trajektorie geführt.

Weitere Vorteile ergeben sich aus der Beschreibung, der Zeichnung und den Unteransprüchen.

### Kurze Beschreibung der Zeichnungen

Ausführungsformen der Erfindung werden nachfolgend unter Bezug auf die Zeichnung näher erläutert. Dabei zeigt:
- Figur 1: eine Aufsicht auf einen Verkehrsraum;
- Figur 2: eine Aufsicht auf einen Verkehrsraum;
- Figur 3: eine Aufsicht auf einen Verkehrsraum;
- Figur 4: eine Aufsicht auf einen Verkehrsraum;
- Figur 5: ein Blockdiagramm eines Fahrerassistenzsystems.

### Ausführungsformen der Erfindung

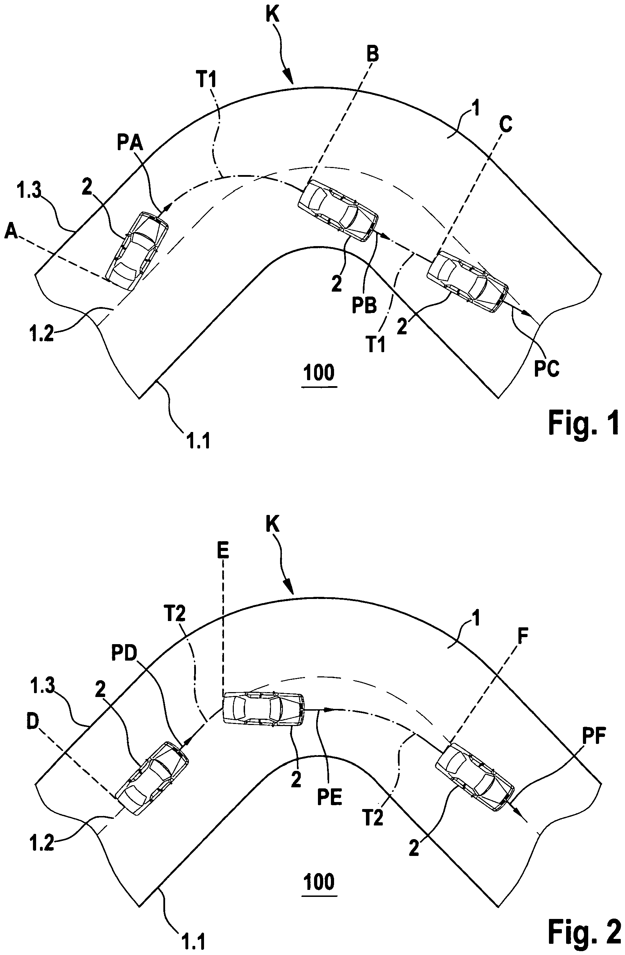

Ausführungsformen der Erfindung werden im Folgenden unter Bezug auf die Zeichnung näher erläutert. Bisher bekannte Querführungssysteme, wie beispielsweise LDW, LKS oder eine automatische Querführung in einem Stauassistenzsystem versuchen in der Regel, das Fahrzeug in der Mitte des detektierten Fahrstreifen zu führen. Die meisten Fahrer empfinden dies zumindest als unangenehm, da die systembedingte Bevorzugung der Mitte des Fahrstreifens von der fahrerindividuell bevorzugten Fahrweise abweicht.
Hier setzt nun die Erfindung an und ermöglicht eine fahrerindividuelle Anpassung eines Steuerverfahrens für ein Fahrerassistenzsystem. Dabei ist wahlweise eine Anpassung an ein unterschiedliches Fahrverhalten ein- und desselben Fahrers möglich. So ist beispielsweise, im Rahmen einer ersten Alternative, ein erster Wahlmodus möglich, der einem progressiven, dynamischen, antizipativen Fahrstil entspricht. Im Rahmen einer zweiten Alternative ist ein zweiter Wahlmodus möglich, der eher einem defensiven Fahrstil entspricht. Im Folgenden wird zunächst, unter Bezug auf Figur 1, auf den ersten Wahlmodus eingegangen. Figur 1 zeigt eine Aufsicht auf einen Verkehrsraum 100 mit einem Fahrstreifen 1. Der Fahrsteifen 1 ist durch Markierungen 1.1, 1.3 begrenzt. Die Mitte des Fahrstreifens 1 ist durch die Bezugsziffer 1.2 gekennzeichnet. Auf dem Fahrsteifen 1 bewegt sich ein mit einem Fahrerassistenzsystem ausgerüstetes Fahrzeug 2 und durchfährt eine Kurve K des Fahrstreifens 1. Zeitlich aufeinander folgende Positionen des Fahrzeugs 2 sind mit den Buchstaben A,B und C bezeichnet. Bei dem jetzt zunächst beschriebenen ersten Wahlmodus fährt das Fahrzeug 2 in Position A in die Kurve K des Fahrstreifens 1 ein. Dem dynamischen Fahrstil des Fahrers entsprechend, ist die durch den Pfeil PA bezeichnete Richtung des Fahrzeugs 2 eher zur Außenseite des Fahrstreifens 1 orientiert. Das Fahrzeug 2 befindet sich also nicht auf der Mitte 1.2 des Fahrstreifens, sondern orientiert sich eher an der Markierung 1.3 des Fahrstreifens 1. Im Scheitelpunkt der Kurve K, entsprechend der Position B des Fahrzeugs 2, dirigiert das Fahrerassistenzsystem das Fahrzeug 2 in Richtung des Pfeils PB, also auf die durch die Markierung 1.1 gekennzeichnete Innenseite des Fahrstreifens 1. Im Ausgangsbereich der Kurve K, entsprechend der Position C des Fahrzeugs 2 zielt die Fahrtrichtung des Fahrzeugs 2, entsprechend dem Pfeil PC, wieder auf die Mitte 1.2 des Fahrstreifens. Die zuvor beschriebene Trajektorie des Fahrzeugs 2 wird bei der Wahl des ersten Wahlmodus von dem Fahrerassistenzsystem bestimmt. Den Verlauf des Fahrstreifens 1 und die relative Position des Fahrzeugs 2 in Bezug auf den Fahrstreifen 1, bestimmt das Fahrerassistenzsystem auf an sich bekannte Weise durch die Detektion der den Fahrstreifen 1 begrenzenden Markierungen 1.1, 1.2, 1.3 mittels eines bordeigenen Sensorsystems, das insbesondere mindestens einen Videosensor umfasst. Besonders vorteilhaft kann die Position des Fahrzeugs 2 auch mit den Daten einer digitalen Karte eines Navigationssystems bestimmt werden, das sich auf Satelliten abstützt (insbesondere GPS-System). Mit den Daten aus der digitalen Karte kann das Fahrerassistenzsystem besonders vorteilhaft diejenigen Positionen A, B, C bestimmen, in denen vorteilhaft eine Änderung der Fahrtrichtung des Fahrzeugs 2 vorzunehmen ist, um die dem gewählten Wahlmodus entsprechende Trajektorie T zu befahren.

Ein zweiter Wahlmodus, der einer eher defensiven Fahrweise des Fahrers entspricht, wird im Folgenden unter Bezug auf Figur 2 erläutert. Auch Figur 2 zeigt wiederum eine Aufsicht auf einen schematisch dargestellten Verkehrsraum 100 mit einem Fahrstreifen 1. Der Fahrstreifen 1 ist von Markierungen 1.1, 1.3 begrenzt. Die Mitte des Fahrstreifens 1 ist mit der Bezugsziffer 1.2 gekennzeichnet. Auf dem Fahrstreifen 1 bewegt sich ein Fahrzeug 2. Das in Position D befindliche Fahrzeug 2 fährt in eine Kurve K des Fahrstreifens 1 ein. Infolge der defensiven Fahrweise orientiert das Fahrerassistenzsystem das Fahrzeug in Richtung des Pfeils PD, also in Richtung auf die Mitte 1.2 des Fahrstreifens 1. In dem Scheitelpunkt der Kurve K wird das Fahrzeug 2 eher in Richtung des Pfeils PF, also in Richtung auf die Innenseite des Fahrstreifens 1, geführt. Im Ausgang der Kurve K wird das Fahrzeug 2 in Richtung des Pfeils PF, also wieder auf die Mitte 1.2 des Fahrstreifens 1 geführt. Infolge der eher defensiven Fahrweise bewegt sich also das Fahrzeug 2 auf der Trajektorie T2.

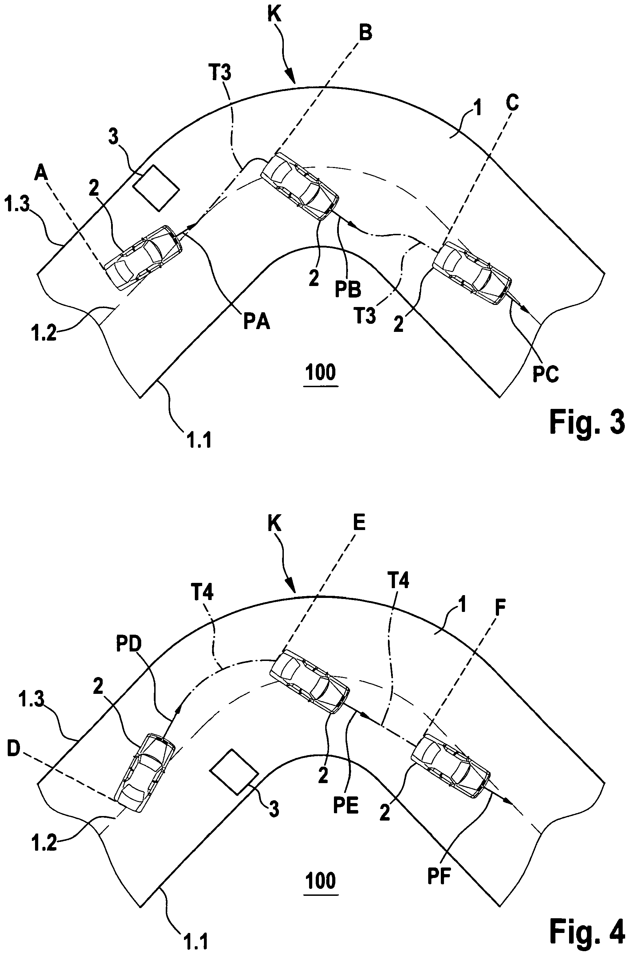

Aus DE 10 2007 015 879.5 ist es bereits bekannt, nach Erfassen eines Hindernisses die Solltrajektorie eines Fahrzeugs derart zu verändern, dass ein gefahrloses Passieren des erfassten Hindernisses möglich ist. Auch diese Maßnahme lässt sich vorteilhaft mit der Erfindung kombinieren, wie im Folgenden beispielhaft unter Bezug auf Figur 3 und Figur 4 erläutert wird. Figur 3 zeigt im Wesentlichen den schon in Figur 1 dargestellten Verkehrsraum 100. Weiterhin wird angenommen, dass ein auf eine dynamische Fahrweise eingestelltes Fahrerassistenzsystem das Fahrzeug 2 durch eine Kurve K des Fahrstreifens 1 führt. Abweichend zu der in Figur 1 beispielhaft dargestellten Verkehrssituation zeigt Figur 3 jetzt ein Hindernis 3, dass sich im Eingang der Kurve K auf der linken Seite des Fahrstreifens 1 befindet. Bei diesem Hindernis 3 kann es sich beispielsweise um ein dort parkendes oder auch langsam fahrendes Fahrzeug handeln.

Das Fahrerassistenzsystem wird erfindungsgemäß nun derart gesteuert, dass in der beschriebenen Situation die Trajektorie des Fahrzeugs 2 nicht, wie in Figur 1 dargestellt, an dem äußeren Rand des Fahrstreifens 1 vorbei führt. Vielmehr wird eine Trajektorie T3 gewählt, die eher auf der Mitte 1.2 des Fahrstreifens 1 verläuft. Auf diese Weise kann das Hindernis 3 gefahrlos passiert werden. Sofern die Verkehrssituation es wieder zulässt, das Hindernis 3 also hinter dem Fahrzeug 2 liegt, steuert das Fahrerassistenzsystem das Fahrzeug 2 wieder auf die der dynamischen Fahrweise entsprechende Trajektorie.

Figur 4 verdeutlicht ein analoges Steuerverhalten bei der defensiven Fahrweise entsprechend dem zweiten Wahlmodus. Da sich am Eingang der Kurve K des Fahrstreifens 1 ein Hindernis 3 befindet, wird das Fahrzeug 2 in Richtung des Pfeils PD entlang der Trajektorie T4 geführt, die von der Mitte 1.2 des Fahrstreifens 1 abweicht. Nach störungsfreiem Passieren des Hindernisses 3 wird das Fahrzeug 2 wieder auf der der vorgewählten defensiven Fahrweise entsprechenden Trajektorie geführt.

Im Rahmen der Erfindung ist es weiterhin vorteilhaft möglich, bei der Steuerung und Führung des Fahrzeugs 2 auf den den Wahlmodi entsprechenden Trajektorien auch noch zusätzliche Einflussgrößen zu berücksichtigen. Diese Einflussgrößen können fahrzeugspezifisch, umfeldspezifisch oder umweltspezifisch sein oder auch beliebige Kombinationen dieser Einflussgrößen umfassen, sofern sie bei Betrieb des Fahrzeugs 2 vorliegen. Bei den fahrzeugspezifischen Einflussgrößen können beispielsweise Parameter des Fahrzeugs 2, wie die maximal mögliche Querbeschleunigung, die aktuelle Belastung des Fahrzeugs, der Zustand der Reifen oder ähnliches, berücksichtigt werden. Bei den umfeldspezifischen Einflussgrößen können beispielsweise der Ausbau- und oder der Erhaltungszustand der den Fahrstreifen 1 umfassenden Fahrbahn berücksichtigt werden. Bei den umweltspezifischen Einflussgrößen können beispielsweise Witterungs- und Sichtbedingungen berücksichtigt werden. Voraussetzung ist, dass entsprechende Sensoren vorhanden sind, um diese Einflussgrößen zu erfassen.

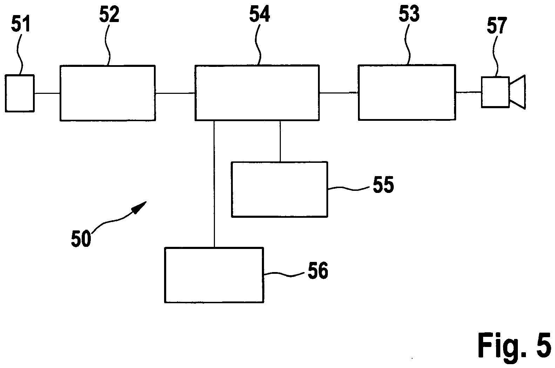

Ein Blockdiagramm eines für die Durchführung des erfindungsgemäßen Verfahrens geeigneten Fahrerassistenzsystems 50 ist in Figur 5 dargestellt. Das Fahrerassistenzsystem 50 umfasst beispielsweise ein Funktionsmodul 53 (LDW = Lane Departure Warning), ein Funktionsmodul 55 (LKS = Lane Keeping Support) und ggf. noch zusätzlich ein Funktionsmodul 52 (LCA = Lane Change Aid). Weiterhin können mindestens ein Videosensor 57 und ein Radarsensor 51 vorgesehen sein. Ausgangsseitig sind die genannten Funktionsmodule mit einem Funktionsmodul Koordination 54 verbunden. Mit Hilfe des mindestens einen Videosensors 51 erfasst das Funktionsmodul 53 des Fahrerassistenzsystems 50 die Markierungen 1.1, 1.3 des Fahrstreifens 1, um so insbesondere den Verlauf des Fahrstreifens 1 zu detektieren. Unter Mitwirkung des mindestens einen Radarsensors werden Hindernisse 3 auf dem eigenen Fahrstreifen 1 erfasst. Das Funktionsmodul 54 koppelt die Funktionsmodule 52 und 53 und steuert diese. Sofern ein Hindernis 3 detektiert wird, kann über das Funktionsmodul 56 zumindest ein Warnsignal ausgegeben werden. Dabei sind ein optisches und/oder akustisches und/oder haptisches Warnsignal bzw. beliebige Kombinationen dieser Warnsignale möglich. Weiterhin kann, über ein Funktionsmodul 55, in Bordsysteme des Fahrzeugs 2, wie insbesondere das Lenksystem, das Bremssystem, ein ESP-System oder dergleichen, eingegriffen werden, um das Fahrzeug 2 auf einer gewünschten Trajektorie zu führen.

## Patentansprüche

1. Verfahren für die Steuerung eines Fahrerassistenzsystems (50) mit Sensoren für die Erfassung des Fahrzeugumfelds und einer Einrichtung für den Eingriff in Bordsysteme des Fahrzeugs (2) in Abhängigkeit von Ausgangssignalen der Sensoren, wobei das Fahrerassistenzsystem (50) mindestens den Verlauf eines von dem Fahrzeug (2) befahrenen Fahrstreifens (1) und die Position des Fahrzeugs (2) in Bezug auf den Fahrstreifen (1) erfasst und das Fahrzeug (2) auf einer Trajektorie (T1, T2, T3, T4) führt, wobei das Fahrerassistenzsystem die Trajektorie (T1, T2, T3, T4) in Abhängigkeit von dem Fahrerwunsch festlegt,
**dadurch gekennzeichnet, dass** mindestens zwei Wahlmodi vorgesehen sind, die einer dynamischen bzw. einer defensiven Fahrweise des Fahrers entsprechen und dass eine Trajektorie (T1, T2, T3, T4) für das Fahrzeug (2) in Abhängigkeit von dem jeweils ausgewählten Wahlmodus festgelegt wird.

2. Verfahren nach Anspruch 1, **dadurch gekennzeichnet, dass** der Fahrerwunsch durch eine von dem Fahrer betätigbare Schalteinrichtung oder dergleichen festgelegt wird.

3. Verfahren nach Anspruch 1, **dadurch gekennzeichnet, dass** das Fahrerassistenzsystem (50) den Fahrerwunsch automatisch erfasst, indem es die Fahrweise des Fahrers erfasst und diese auswertet.

4. Verfahren nach einem der vorhergehenden Ansprüche, **dadurch gekennzeichnet, dass** eine jedem Wahlmodus entsprechende Charakteristik des Fahrzeugs bei der Applikation festgelegt wird.

5. Verfahren nach einem der vorhergehenden Ansprüche, **dadurch gekennzeichnet, dass** bei Auswahl eines eine dynamische Fahrweise kennzeichnenden Wahlmodus die Trajektorie (T1, T2, T3, T4) des Fahrzeugs (2) derart festgelegt wird, dass das Fahrzeug (2) bei Einfahrt in eine Kurve (K) des Fahrstreifens (1) eher zu der Außenseite des Fahrstreifens (1) orientiert geführt wird, dass das Fahrzeug (2) in dem Scheitelpunkt der Kurve (K) zu der Innenseite des Fahrstreifens (1) geführt wird, und dass an dem Ausgang der Kurve (K) das Fahrzeug (2) im Wesentlichen wieder auf der Mitte (1.2) des Fahrstreifens (1) geführt wird.

6. Verfahren nach einem der vorhergehenden Ansprüche, **dadurch gekennzeichnet, dass** bei Auswahl eines eine defensive Fahrweise kennzeichnenden Wahlmodus die Trajektorie (T1, T2, T3, T4) des Fahrzeugs (2) derart festgelegt wird, dass das Fahrzeug (2) bei Einfahrt in eine Kurve (K) des Fahrstreifens (1) eher zu der Mitte (1.2) des Fahrstreifens (1) orientiert geführt wird, dass das Fahrzeug (2) in dem Scheitelpunkt der Kurve (K) geringfügig zu der Innenseite des Fahrstreifens (1) geführt wird, und dass an dem Ausgang der Kurve (K) das Fahrzeug (2) im Wesentlichen wieder auf der Mitte (1.2) des Fahrstreifens (1) geführt wird.

7. Verfahren nach einem der vorhergehenden Ansprüche, **dadurch gekennzeichnet, dass** bei Detektion eines Hindernisses (3) auf dem Fahrstreifen (1) die dem Wahlmodus entsprechende Trajektorie (T1, T2, T3, T4) des Fahrzeugs (2) derart verändert wird, dass das Fahrzeug (2) risikofrei an dem Hindernis (3) vorbeigeführt wird.

8. Verfahren nach einem der vorhergehenden Ansprüche, **dadurch gekennzeichnet, dass** nach dem Passieren des Hindernisses (3) das Fahrzeug (2) wieder auf die dem Wahlmodus entsprechende Trajektorie (T1, T2, T3, T4) geführt wird.

9. Verfahren nach einem der vorhergehenden Ansprüche, **dadurch gekennzeichnet, dass** die einem Wahlmodus entsprechende Trajektorie (T1, T2, T3, T4) von fahrzeugspezifischen Einflussgrößen beeinflusst wird.

10. Verfahren nach einem der vorhergehenden Ansprüche, **dadurch gekennzeichnet, dass** die einem Wahlmodus entsprechende Trajektorie (T, T1, T2, T3, T4) von umfeldspezifischen Einflussgrößen beeinflusst wird.

11. Verfahren nach einem der vorhergehenden Ansprüche, **dadurch gekennzeichnet, dass** die einem Wahlmodus entsprechende Trajektorie (T1, T2, T3, T4) von umweltspezifischen Einflussgrößen beeinflusst wird.

12. Fahrerassistenzvorrichtung (50) und Einrichtung für den Eingriff in Bordsysteme des Fahrzeugs (2) in Abhängigkeit von Ausgangssignalen von Sensoren für die Erfassung des Fahrzeugumfelds (Verkehrsraum 100), wobei das Fahrerassistenzsystem mindestens den Verlauf eines von dem Fahrzeug (2) befahrenen Fahrstreifens (1) und die Position des Fahrzeugs (2) in Bezug auf den Fahrstreifen (1) erfasst und das Fahrzeug (2) auf einer Trajektorie (T1, T2, T3, T4) führt, **dadurch gekennzeichnet, dass** die Fahrerassistenzvorrichtung eine Einrichtung umfasst, die eine von der Fahrweise des Fahrers abhängige Festlegung der Trajektorie (T1, T2, T3, T4) ermöglicht,
**dadurch gekennzeichnet, dass** mindestens zwei Wahlmodi vorgesehen sind, die einer dynamischen bzw. einer defensiven Fahrweise des Fahrers entsprechen und dass eine Trajektorie (T1, T2, T3, T4) für das Fahrzeug (2) in Abhängigkeit von dem jeweils ausgewählten Wahlmodus festgelegt wird.

## Claims

1. Method for controlling a driver assistance system (50) with sensors for sensing the surroundings of the vehicle and an apparatus for intervening in on-board systems of the vehicle (2) as a function of output signals of the sensors, wherein the driver assistance system (50) senses at least the profile of a lane (1) on which the vehicle (2) is travelling and the position of the vehicle (2) with respect to the lane (1), and guides the vehicle (2) on a trajectory (T1, T2, T3, T4), wherein the driver assistance system defines the trajectory (T1, T2, T3, T4) as a function of the driver's request,
**characterized in that** at least two selection modes are provided which correspond to a dynamic and a defensive driving style of the driver, and **in that** a trajectory (T1, T2, T3, T4) is defined for the vehicle (2) as a function of the respectively selected selection mode.

2. Method according to Claim 1, **characterized in that** the driver's request is defined by a switching device or the like which can be activated by the driver.

3. Method according to Claim 1, **characterized in that** the driver assistance system (50) automatically senses the driver's request by sensing the driving style of the driver and evaluating it.

4. Method according to one of the preceding claims, **characterized in that** a characteristic of the vehicle which corresponds to each selection mode is defined in the application.

5. Method according to one of the preceding claims, **characterized in that** in the selection of a selection mode which characterizes a dynamic driving style the trajectory (T1, T2, T3, T4) of the vehicle (2) is defined in such a way that on entering a bend (K) of the lane (1) the vehicle (2) tends to be guided with an orientation towards the outer side of the lane (1), **in that** the vehicle (2) is guided towards the inner side of the lane (1) at the apex of the bend (K), and **in that** at the exit from the bend (K) the vehicle (2) is guided essentially back to the centre (1.2) of the lane (1).

6. Method according to one of the preceding claims, **characterized in that** in the selection of a selection mode which characterizes a defensive driving style the trajectory (T1, T2, T3, T4) of the vehicle (2) is defined in such a way that on entering a bend (K) of the lane (1) the vehicle (2) tends to be guided with an orientation towards the centre (1.2) of the lane (1), **in that** the vehicle (2) is guided slightly towards the inner side of the lane (1) at the apex of the bend (K), and **in that** at the exit from the bend (K) the vehicle (2) is guided essentially back to the centre (1.2) of the lane (1).

7. Method according to one of the preceding claims, **characterized in that**, when an obstacle (3) is detected on the lane (1), the trajectory (T1, T2, T3, T4) of the vehicle (2) which corresponds to the selection mode is changed in such a way that the vehicle (2) is guided past the obstacle (3) without a risk.

8. Method according to one of the preceding claims, **characterized in that**, after the obstacle (3) has been passed, the vehicle (2) is guided back onto the trajectory (T1, T2, T3, T4) which corresponds to the selection mode.

9. Method according to one of the preceding claims, **characterized in that** the trajectory (T1, T2, T3, T4) which corresponds to a selection mode is influenced by vehicle-specific influencing variables.

10. Method according to one of the preceding claims, **characterized in that** the trajectory (T1, T2, T3, T4) which corresponds to a selection mode is influenced by surroundings-specific influencing variables.

11. Method according to one of the preceding claims, **characterized in that** the trajectory (T1, T2, T3, T4) which corresponds to a selection mode is influenced by environment-specific influencing variables.

12. Driver assistance device (50) and apparatus for intervening in on-board systems of the vehicle (2) as a function of output signals of sensors for sensing the surroundings of the vehicle (traffic space 100), wherein the driver assistance system senses at least the profile of a lane (1) on which the vehicle (2) is travelling and the position of the vehicle (2) with respect to the lane (1), and guides the vehicle (2) on a trajectory (T1, T2, T3, T4), **characterized in that** the driver assistance device comprises an apparatus which permits the trajectory (T1, T2, T3, T4) to be defined as a function of the driving style of the driver,
**characterized in that** at least two selection modes are provided which correspond to a dynamic and a defensive driving style of the driver, and **in that** a trajectory (T1, T2, T3, T4) for the vehicle (2) is defined as a function of the respectively selected selection mode.

## Revendications

1. Procédé de commande d'un système d'assistance à la conduite (50) équipé de capteurs pour détecter l'environnement du véhicule et d'un dispositif pour intervenir dans des systèmes de bord du véhicule (2) en fonction de signaux de sortie des capteurs, le système d'assistance à la conduite (50) détectant au moins le tracé d'une bande de conduite (1) parcourue par le véhicule (2) et la position du véhicule (2) par rapport à la bande de conduite (1) et guidant le véhicule (2) sur une trajectoire (T1, T2, T3, T4), le système d'assistance à la conduite établissant la trajectoire (T1, T2, T3, T4) en fonction du souhait émis par le conducteur, **caractérisé en ce qu'**au moins deux modes optionnels, correspondant à un type de conduite dynamique ou défensif du conducteur, sont prévus et **en ce qu'**une trajectoire (T1, T2, T3, T4) est établie pour le véhicule (2) en fonction du mode optionnel respectivement sélectionné.

2. Procédé selon la revendication 1, **caractérisé en ce que** le souhait du conducteur est déterminé par le biais d'un dispositif de changement de vitesse actionnable par le conducteur ou de son équivalent.

3. Procédé selon la revendication 1, **caractérisé en ce que** le système d'assistance à la conduite (50) détecte automatiquement le souhait du conducteur en détectant le type de conduite du conducteur et en l'analysant.

4. Procédé selon l'une quelconque des revendications précédentes, **caractérisé en ce qu'**une caractéristique du véhicule correspondant à chaque mode optionnel est déterminée par l'application.

5. Procédé selon l'une quelconque des revendications précédentes, **caractérisé en ce qu'**en cas de sélection d'un mode optionnel caractéristique d'un type de conduite dynamique, la trajectoire (T1, T2, T3, T4) du véhicule (2) est établie de telle sorte que le véhicule (2) est guidé de façon orientée plutôt vers le côté extérieur de la bande de conduite (1) au début du virage (K) de la bande de conduite (1), que le véhicule (2) est guidé vers le côté intérieur de la bande de conduite (1) au point culminant du virage (K) et que le véhicule (2) est ramené pour l'essentiel au centre (1.2) de la bande de conduite (1) à la sortie du virage (K).

6. Procédé selon l'une quelconque des revendications précédentes, **caractérisé en ce qu'**en cas de sélection d'un mode optionnel caractéristique d'un type de conduite défensif, la trajectoire (T1, T2, T3, T4) du véhicule (2) est établie de telle sorte que le véhicule (2) est guidé de façon orientée plutôt au centre (1.2) de la bande de conduite (1) au début du virage (K) de la bande de conduite (1), que le véhicule (2) est guidé légèrement vers le côté intérieur de la bande de conduite (1) au point culminant du virage (K) et que le véhicule (2) est ramené pour l'essentiel au centre (1.2) de la bande de conduite (1) à la sortie du virage (K).

7. Procédé selon l'une quelconque des revendications précédentes, **caractérisé en ce qu'**en cas de détection d'un obstacle (3) sur la bande de conduite (1), la trajectoire (T1, T2, T3, T4) du véhicule (2) correspondant au mode optionnel est modifiée de telle sorte que le véhicule (2) contourne sans risque l'obstacle (3).

8. Procédé selon l'une quelconque des revendications précédentes, **caractérisé en ce qu'**une fois l'obstacle (3) passé, le véhicule (2) est de nouveau guidé sur la trajectoire (T1, T2, T3, T4) correspondant au mode optionnel.

9. Procédé selon l'une quelconque des revendications précédentes, **caractérisé en ce que** la trajectoire (T1, T2, T3, T4) correspondant à un mode optionnel est influencée par des grandeurs empiriques spécifiques au véhicule.

10. Procédé selon l'une quelconque des revendications précédentes, **caractérisé en ce que** la trajectoire (T1, T2, T3, T4) correspondant à un mode optionnel est influencée par des grandeurs empiriques spécifiques à l'environnement alentour.

11. Procédé selon l'une quelconque des revendications précédentes, **caractérisé en ce que** la trajectoire (T1, T2, T3, T4) correspondant à un mode optionnel est influencée par des grandeurs empiriques spécifiques à l'environnement climatique ambiant.

12. Dispositif d'assistance à la conduite (50) et dispositif pour intervenir dans des systèmes de bord du véhicule (2) en fonction de signaux de sortie de capteurs servant à détecter l'environnement du véhicule (espace de circulation 100), le système d'assistance à la conduite détectant au moins le tracé d'une bande de conduite (1) parcourue par le véhicule (2) et la position du véhicule (2) par rapport à la bande de conduite (1) et guidant le véhicule (2) sur une trajectoire (T1, T2, T3, T4), **caractérisé en ce que** le dispositif d'assistance à la conduite comprend un dispositif qui permet de déterminer la trajectoire (T1, T2, T3, T4) en fonction du type de conduite du conducteur, **caractérisé en ce qu'**au moins deux modes optionnels, correspondant à un type de conduite dynamique ou défensif du conducteur, sont prévus et **en ce qu'**une trajectoire (T1, T2, T3, T4) est établie pour le véhicule (2) en fonction du mode optionnel sélectionné.
